# EUROPEAN PATENT APPLICATION

(11) **EP 4 768 537 A1**
(43) Date of publication of application: **01.07.2026**
(21) Application number: 25225586.4
(22) Date of filing: 19.12.2025
(51) Int. Cl.: C08L 23/12, C08L 71/02, H01B 3/44

(54) **A POLYOLEFIN RESIN COMPOSITION WITH IMPROVED INTERFACIAL STABILITY FOR INSULATION, A METHOD FOR PREPARING THE SAME AND AN ARTICLE COMPRISING THE SAME**

(30) Priority: 26.12.2024 KR 20240196936
(71) Applicant: Hanwha TotalEnergies Petrochemical Co., Ltd., Seosan-si, Chungcheongnam-do 31900 (KR)
(72) Inventor: JUNG, Hyun Tae, 31900 Seosan-si (KR); SONG, Jong Kun, 31900 Seosan-si (KR); LEE, Eun Woong, 31900 Seosan-si (KR)
(74) Representative: Gleiss Große Schrell und Partner mbB

(57) **Abstract**

The present invention relates to a polyolefin resin composition with improved interfacial stability for insulation, a method for preparing the same and an article comprising the same, and more specifically, it relates to a polyolefin resin composition which comprises an ethylene-propylene block copolymer, a propylene-alpha-olefin rubber copolymer with a propylene content in a specific range, and polyethylene glycol with a number average molecular weight in a specific range, and has excellent flexibility, low-temperature impact resistance, heat resistance, etc., good insulation breakdown characteristics, and, in particular, excellent interface stability for long-term life improvement, so that it can be suitably utilized as an eco-friendly material for insulation layer in power cables for low-voltage, high-voltage, or extra-high-voltage direct current (DC) or alternating current (AC) transmission or distribution (especially, insulation layer of a high-voltage or extra-high-voltage power cables), a method for preparing the same and an article (especially, power cable) comprising the same.

## Description

### [TECHNICAL FIELD]

The present invention relates to a polyolefin resin composition with improved interfacial stability for insulation, a method for preparing the same and an article comprising the same, and more specifically, it relates to a polyolefin resin composition which comprises an ethylene-propylene block copolymer, a propylene-alpha-olefin rubber copolymer with a propylene content in a specific range, and polyethylene glycol with a number average molecular weight in a specific range, and has excellent flexibility, low-temperature impact resistance, heat resistance, etc., good insulation breakdown characteristics, and, in particular, excellent interface stability for long-term life improvement, so that it can be suitably utilized as an eco-friendly material for insulation layer in power cables for low-voltage, high-voltage, or extra-high-voltage direct current (DC) or alternating current (AC) transmission or distribution (especially, insulation layer of high-voltage or extra-high-voltage power cables), a method for preparing the same and an article (especially, power cable) comprising the same.

### [BACKGROUND ART]

Insulation material in power cable is located between a conductor transmitting electricity and an external environment, and its role is to prevent the current from flowing outward. In particular, as voltage increases, long-term cable reliability is required, and also required are better electrical insulation performance than that at low voltage, thermal stability capable of being maintained stably even at high temperature, and mechanical flexibility to prevent damage from external tension during cable packaging and installation. In particular, high-voltage and extra-high-voltage power cables used in power infrastructure require insulation materials with superior performance because they generally have a lifespan of 30 to 40 years once installed, and even a single accident results in significant social and industrial costs.

Crosslinked polyethylene (XLPE) is used as an insulation layer material for high-voltage and extra-high-voltage power cables. XLPE has a three-dimensional network structure by initiating a radical reaction with external heat and an initiator (peroxide, etc.) and forming chemical bonds between polyethylene polymers, and through this process, it has excellent heat resistance. The crosslinked structure has the advantage of higher thermal stability than non-crosslinked polyethylene and prevents the material from melting even at high temperature, and thus it can withstand the heat generated when current flows within the conductor, increasing power transmission efficiency. However, since the scorch and crosslinked byproducts can affect insulation performance, technologies to reduce them are needed, and unlike thermoplastic plastics, the used XLPE power cables and the scrap generated during the production process are difficult to remelt or reprocess, and so they are landfilled or incinerated, which is not environmentally friendly.

Since polypropylene-based polyolefin compositions are thermoplastic polymers, they are easy to reprocess due to the absence of crosslinking process and thus are recyclable, and have excellent electrical insulation properties, and so they can be suitably used as eco-friendly power cable insulation materials. In particular, polypropylene compositions mixed with polyolefin elastomers have similar softness to existing XLPE, and can be adjusted to a level that allows application to high-voltage and ultra-high-voltage power cables. However, in order for such compositions consisting of multiple components to ensure long-term insulation performance, phase separation or interfacial separation must not occur.

Generally, the insulation layer of the power cable becomes thicker as the operating voltage increases, and from the extrusion into the cable shape to the cooling thereof to room temperature, the insulation middle layer is cooled down very slowly. At this time, since the crystallization rates of the components constituting the multi-component composition are different from each other, local stress occurs and thereby the possibility of interfacial separation occurrence increases. This interfacial separation leads to non-uniformity in the insulating material or the formation of voids between different phases, which can cause partial discharge and degrade the insulating performance over time. To address such problems, it is important to improve the interfacial stability of the polypropylene composition so that it maintains a uniform mixing state even in temperature changes that occur in the insulation body during the cable processing and through the life of the cable's operation after installation.

In this regard, Korean Patent No. 10-2209153 discloses a polyolefin resin composition comprising a propylene homopolymer or an ethylene-propylene block copolymer, an ethylene-alpha-olefin rubber copolymer and a copolymer of ethylene and a polar monomer, and evaluates the volume resistivity and DC dielectric breakdown strength thereof.

U.S. Patent No. 10,755,832 discloses a composition for insulation of medium- and high-voltage cables comprising a polypropylene copolymer polymerized with a Ziegler-Natta catalyst and an ethylene copolymer or an insulating oil, and U.S. Patent No. 7,619,165 evaluated the properties and copolymer particle size of a polyolefin resin composition for power cable insulation comprising a heterophase propylene copolymer and a low-density polyethylene. However, as can be seen from the fact that the evaluation was made with injection/hot-pressed specimens under rapid cooling conditions despite that the interfacial separation phenomenon between polyethylene and polypropylene is generally known, there is no consideration of slow cooling conditions when processing high-voltage cables.

European Patent No. 2072576 discloses a composition for insulation of medium- and high-voltage cables comprising polypropylene, a propylene-based elastomeric polymer, and an unsaturated polymer having units capable of chemically crosslinking with them. However, although such a composition offers high long-term reliability in view of structure, it is expensive and environmentally unfriendly because recycling is possible only after breaking chemical bonds through post-treatment process.

Korean Patent No. 10-1710873 discloses a blend composition for insulation of direct current or alternating current cables that comprises an ethylene-propylene copolymer and butylene-propylene copolymer and does not undergo interfacial separation at a cooling rate lower than 10°C/min. However, although it suppresses void formation that degrades insulation properties, there is no consideration of stability against interface separation under operating conditions of power transmission cables.

### [CONTENTS OF THE INVENTION]

### [PROBLEMS TO BE SOLVED]

The purpose of the present invention is to provide a polyolefin resin composition which has excellent flexibility and excellent interface stability for long-term life improvement and so can be suitably utilized as an eco-friendly material for insulation layer in high-voltage or extra-high-voltage power cables, a method for preparing the same and an article comprising the same.

### [TECHNICAL MEANS]

An aspect of the present invention provides a polyolefin resin composition comprising (A) an ethylene-propylene block copolymer; (B) a propylene-alpha-olefin rubber copolymer with a propylene content of more than 60 % by weight; and (C) a polyethylene glycol with a number average molecular weight of less than 20,000 g/mol.

In an embodiment, the ethylene-propylene block copolymer may be a polymerization product of a propylene homopolymer or an ethylene-propylene random copolymer and an ethylene-propylene rubber copolymer.

In an embodiment, the amount of rubber component in 100 % by weight of the ethylene-propylene block copolymer may be 1 to 45 % by weight, as extracted with a xylene solvent at 135°C.

In an embodiment, the intrinsic viscosity of rubber component in the ethylene-propylene block copolymer may be 1.0 to 4.0 dl/g, as measured in a decalin solvent at 135°C.

In an embodiment, the melting temperature (Tm) of the ethylene-propylene block copolymer may be 145 to 165°C.

In an embodiment, the melt index of the ethylene-propylene block copolymer may be 0.5 to 20.0 g/10 min, as measured at 230°C under a load of 2.16 kg according to ASTM D1238.

In an embodiment, the propylene-alpha-olefin rubber copolymer may be at least one selected from the group consisting of propylene-ethylene rubber, propylene-1-butene rubber, propylene-butylene rubber, propylene-ethylene-butylene rubber, propylene-1-pentene rubber, propylene-1-hexene rubber, propylene-1-heptene rubber, propylene-1-octene rubber and propylene-4-methyl-1-pentene rubber.

In an embodiment, the polyolefin resin composition may further comprise at least one additive selected from the group consisting of antioxidant, neutralizer, UV stabilizer, long-term heat stabilizer, slip agent, anti-blocking agent, reinforcing agent, filler, weather stabilizer, antistatic agent, lubricant, nucleating agent, flame retardant, pigment and dye.

In an embodiment, the amount of rubber component in 100 % by weight of the polyolefin resin composition may be 25 to 45 % by weight, as extracted with a xylene solvent at 135°C.

In an embodiment, the glass transition temperature of rubber component in the polyolefin resin composition may be -60 to -35°C.

In an embodiment, the melting temperature (Tm) of the polyolefin resin composition may be 145 to 165°C.

In an embodiment, the melt index of the polyolefin resin composition may be 0.5 to 20.0 g/10 min, as measured at 230°C under a load of 2.16 kg according to ASTM D1238.

In an embodiment, the flexural modulus of the polyolefin resin composition may be less than 450 MPa, as measured by applying a flexural load at a rate of 5 mm/min according to ASTM D790.

In an embodiment, a sheet with 1 mm thickness prepared by molding the polyolefin resin composition at a cooling rate of 1°C/min or less may not exhibit interfacial separation.

In an embodiment, a sheet with 20 mm thickness prepared by molding the polyolefin resin composition at a cooling rate of 1°C/min or less, when aged at 80°C for 30 days, may not exhibit interfacial separation.

The other aspect of the present invention provides a method for preparing a polyolefin resin composition, comprising (1) a step of copolymerizing propylene and alpha-olefin in the presence of ethylene-propylene block copolymer to produce a propylene-alpha-olefin rubber copolymer with a propylene content of more than 60 % by weight, or blending an ethylene-propylene block copolymer with a propylene-alpha-olefin rubber copolymer with a propylene content of more than 60 % by weight; and (2) a step of adding polyethylene glycol with a number average molecular weight of less than 20,000 g/mol to the resulting product of step (1).

Another aspect of the present invention provides an article comprising the polyolefin resin composition of the present invention.

In an embodiment, the polyolefin resin composition of the present invention comprised in the article may be that molded at a cooling rate of 1°C/min or less.

In an embodiment, the article may be a power cable comprising the polyolefin resin composition of the present invention as insulation layer.

### [EFFECT OF THE INVENTION]

The polyolefin resin composition according to the present invention has excellent flexibility, low-temperature impact resistance, heat resistance, etc., good insulation breakdown characteristics, and, in particular, excellent interface stability for long-term life improvement, so that it can be suitably utilized as an eco-friendly material for insulation layer in power cables for low-voltage, high-voltage, or extra-high-voltage direct current (DC) or alternating current (AC) transmission or distribution (especially, insulation layer of high-voltage or extra-high-voltage power cables).

### [CONCRETE MODE FOR CARRYING OUT THE INVENTION]

The present invention is explained in more detail below.

The polyolefin resin composition of the present invention comprises (A) an ethylene-propylene block copolymer; (B) a propylene-alpha-olefin rubber copolymer with a propylene content of more than 60 % by weight; and (C) a polyethylene glycol with a number average molecular weight of less than 20,000 g/mol.

### (A) Ethylene-propylene block copolymer

The polyolefin resin composition of the present invention comprises an ethylene-propylene block copolymer.

In an embodiment, the ethylene-propylene block copolymer may be a polymerization product (e.g., a multi-stage polymerization product) of a propylene homopolymer or an ethylene-propylene random copolymer and an ethylene-propylene rubber copolymer. For example, a polypropylene-based matrix of propylene homopolymer or ethylene-propylene random copolymer is first polymerized, and then an ethylene-propylene rubber component is block copolymerized to the polypropylene matrix to produce the ethylene-propylene block copolymer.

In an embodiment, the amount of rubber component in 100 % by weight of the ethylene-propylene block copolymer may be 1 to 45 % by weight, as extracted with a xylene solvent at 135°C, and this may be the amount of solvent extract extracted from the ethylene-propylene block copolymer using a xylene solvent at 135°C. If the amount of rubber component in the ethylene-propylene block copolymer is excessively more than the above level, phase transition may occur between the polypropylene-based matrix and the rubber component, which may increase heat deformation rate and decrease tensile strength and elongation, and thus it may be unsuitable for application to power cables. More specifically, the amount of rubber component in 100 % by weight of the ethylene-propylene block copolymer may be 1 % by weight or more, 10 % by weight or more, 20 % by weight or more, or 30 % by weight or more, and it also may be 45 % by weight or less or 40 % by weight or less, but it is not limited thereto.

In an embodiment, the intrinsic viscosity of the rubber component in the ethylene-propylene block copolymer (i.e., the solvent extract extracted from the ethylene-propylene block copolymer using a xylene solvent at 135°C) may be 1.0 to 4.0 dl/g, as measured in a decalin solvent at 135°C. If the intrinsic viscosity of the rubber component in the ethylene-propylene block copolymer is excessively lower than the above level, the impact strength of the molded article may be reduced, and to the contrary, if it is excessively higher than the above level, agglomeration of the rubber component may occur within the ethylene-propylene block copolymer, which may result in space charge accumulation and electric field distortion at the interface between the polypropylene-based matrix and the rubber component. More specifically, the intrinsic viscosity of the rubber component in the ethylene-propylene block copolymer may be 1.0 dl/g or more, 1.1 dl/g or more, 1.2 dl/g or more, 1.3 dl/g or more, 1.4 dl/g or more, or 1.5 dl/g or more, and it also may be 4.0 dl/g or less, 3.5 dl/g or less, 3.0 dl/g or less, 2.7 dl/g or less, 2.6 dl/g or less, or 2.5 dl/g or less, but it is not limited thereto.

In an embodiment, the melting temperature (Tm) of the ethylene-propylene block copolymer may be 145 to 165°C. If the melting temperature of the ethylene-propylene block copolymer is excessively lower than the above level, the heat resistance of the molded article becomes insufficient and resin degeneration by heat may occur, and thus it is not suitable for application to high-voltage power cables in which the operating temperature and instantaneous temperature rise to 130°C or higher. More specifically, the melting temperature of the ethylene-propylene block copolymer may be 145°C or higher, 146°C or higher, 147°C or higher, 148°C or higher, 149°C or higher, or 150°C or higher, and it also may be 165°C or lower, 163°C or lower, 160°C or lower, 158°C or lower, 155°C or lower, or 153°C or lower, but it is not limited thereto.

In an embodiment, the melt index of the ethylene-propylene block copolymer may be 0.5 to 20.0 g/10 min, as measured at 230°C under a load of 2.16 kg according to ASTM D1238. If the melt index of the ethylene-propylene block copolymer is excessively lower than the above level, the extrusion temperature and load may increase, lowering productivity and causing carbonization, and to the contrary, if it is excessively higher than the above level, sagging may occur during the formation of extruded article. More specifically, the melt index of the ethylene-propylene block copolymer may be 0.5 g/10 min or more, 0.7 g/10 min or more, 1.0 g/10 min or more, 1.3 g/10 min or more, or 1.5 g/10 min or more, and it also may be 20.0 g/10 min or less, 15.0 g/10 min or less, 10.0 g/10 min or less, 5.0 g/10 min or less, or 3.0 g/10 min or less, but it is not limited thereto.

In an embodiment, the ethylene content as polymerization unit in the ethylene-propylene block copolymer may be 5 to 30 % by weight, based on 100 % by weight of the ethylene-propylene block copolymer, but it is not limited thereto. More specifically, the ethylene content in 100 % by weight of the ethylene-propylene block copolymer may be 5 % by weight or more, 7 % by weight or more, 10 % by weight or more, 12 % by weight or more, or 15 % by weight or more, and it also may be 30 % by weight or less, 28 % by weight or less, 25 % by weight or less, 23 % by weight or less, or 20 % by weight or less, but it is not limited thereto.

In an embodiment, the propylene content as polymerization unit in the ethylene-propylene block copolymer may be 70 to 95 % by weight, based on 100 % by weight of the ethylene-propylene block copolymer, but it is not limited thereto. More specifically, the propylene content in 100 % by weight of the ethylene-propylene block copolymer may be 70 % by weight or more, 72 % by weight or more, 75 % by weight or more, 77 % by weight or more, or 80 % by weight or more, and it also may be 95 % by weight or less, 93 % by weight or less, 90 % by weight or less, 88 % by weight or less, or 85 % by weight or less, but it is not limited thereto.

In an embodiment, the polyolefin resin composition of the present invention may comprise the ethylene-propylene block copolymer in an amount of 60 to 98 % by weight, based on 100 % by weight of the total of the components (A), (B) and (C). If the amount of the ethylene-propylene block copolymer in the polyolefin resin composition is excessively lower than the above level, the heat resistance of the molded article may decrease and the heat deformation characteristics may deteriorate, causing more severe appearance change during high-temperature operation, and to the contrary, if it is excessively higher than the above level, the content of other ingredients may be relatively reduced, causing problem of insufficient use effect (e.g., problem of poor softness, etc.). More specifically, the amount of the ethylene-propylene block copolymer content in the total 100 % by weight of components (A), (B) and (C) may be 60 % by weight or more, 65 % by weight or more, 70 % by weight or more, 75 % by weight or more, or 80 % by weight or more, and it also may be 98 % by weight or less, 95 % by weight or less, 93 % by weight or less, 90 % by weight or less, 88 % by weight or less or 85 % by weight or less, but it is not limited thereto.

There is no particular limitation to the method for preparing the ethylene-propylene block copolymer, and a method for preparing an ethylene-propylene block copolymer known in the technical field of the present invention pertains can be used as is or with appropriate modification. For example, bulk polymerization, solution polymerization, slurry polymerization, gas phase polymerization, etc. can be used, and either a batch process or a continuous process is possible.

In an embodiment, the ethylene-propylene block copolymer can be prepared by a known polymerization method using a process in which one or more bulk reactors and one or more gas phase reactors are connected in series to enable continuous polymerization (e.g., Hypol process of Mitsui).

Concretely, two bulk reactors and one gas phase reactor are connected in series so that in the bulk reactors, propylene can be injected alone to produce a propylene homopolymer, or ethylene can be additionally injected to produce an ethylene-propylene random copolymer, and in the subsequent third stage reactor, ethylene and propylene are added for block copolymerization of ethylene-propylene rubber component to obtain the final ethylene-propylene block copolymer. The melt index of the resulting copolymer can be controlled by injecting hydrogen into each reactor. When polymerizing propylene homopolymer, the melt index can be adjusted by injecting hydrogen in addition to propylene into each reactor. When polymerizing ethylene-propylene random copolymer, the ratio of ethylene and propylene can be adjusted so that an equal amount of ethylene can be copolymerized in each reactor.

In an embodiment, the ethylene-propylene copolymer may be that polymerized in the presence of a Ziegler-Natta catalyst. The catalyst may be prepared by reacting a titanium compound and an internal electron donor on a magnesium compound support. Specifically, the internal electron donor may be composed of a combination of non-aromatic alkoxy ester compound and phthalic acid ester compound as in Korean Patent No. 10-1988156, but it is not particularly limited thereto. In this catalyst, without particular limitation thereto, it is preferable to use organoaluminum compound (e.g., triethylaluminum) as a cocatalyst and organosilicon compound (e.g., trialkoxysilane) as an external electron donor.

### (B) Propylene-alpha-olefin rubber copolymer with a propylene content of more than 60 % by weight

The polyolefin resin composition of the present invention also comprises a propylene-alpha-olefin rubber copolymer with a propylene content of more than 60 % by weight. This component can play a role in improving the softness of molded article.

If the propylene content as a polymerization unit in the propylene-alpha-olefin rubber copolymer based on 100 % by weight of the propylene-alpha-olefin rubber copolymer is less than or equal to 60 % by weight, the interfacial stability with the ethylene-propylene block copolymer (component A) deteriorates. There is no particular limitation to the upper limit of the propylene content in the propylene-alpha-olefin rubber copolymer, and for example, it may be 98 % by weight or less, based on 100 % by weight of the propylene-alpha-olefin rubber copolymer, but it is not limited thereto. If the propylene content in the propylene-alpha-olefin rubber copolymer is excessively higher than the above level, crystallinity may increase and thus the cold impact strength of the resin composition may deteriorate. The propylene content can be measured using a known measuring means, such as a Fourier transform infrared spectrometer.

More specifically, the propylene content in 100 % by weight of the propylene-alpha-olefin rubber copolymer may be more than 60 % by weight, 61 % by weight or more, 63 % by weight or more, 65 % by weight or more, 67 % by weight or more, 69 % by weight or more, 70 % by weight or more, 71 % by weight or more, 73 % by weight or more, 75 % by weight or more, 77 % by weight or more, 79 % by weight or more, or 80 % by weight or more, and it also may be 98 % by weight or less, 95 % by weight or less, 93 % by weight or less, 90 % by weight or less, or 88 % by weight or less, but it is not limited thereto.

In an embodiment, the alpha-olefin in the propylene-alpha-olefin rubber copolymer may have 2 to 8 carbon atoms, and the comonomer may be one or more. However, the alpha-olefin here is other than propylene.

In an embodiment, the propylene-alpha-olefin rubber copolymer may be at least one selected from the group consisting of propylene-ethylene rubber, propylene-1-butene rubber, propylene-butylene rubber, propylene-ethylene-butylene rubber, propylene-1-pentene rubber, propylene-1-hexene rubber, propylene-1-heptene rubber, propylene-1-octene rubber and propylene-4-methyl-1-pentene rubber.

In an embodiment, the melt index of the propylene-alpha-olefin rubber copolymer may be 0.5 to 30.0 g/10 min, as measured at 230°C under a load of 2.16 kg according to ASTM D1238. If the melt index of the propylene-alpha-olefin rubber copolymer is excessively lower than the above level, the extrusion temperature and load may increase, lowering productivity and causing carbonization, and to the contrary, if it is excessively higher than the above level, the melting behavior may become different from that of the ethylene-propylene block copolymer, deteriorating interfacial stability. More specifically, the melt index of the propylene-alpha-olefin rubber copolymer may be 0.5 g/10 min or more, 0.7 g/10 min or more, or 1.0 g/10 min or more, and it also may be 30.0 g/10 min or less, 25.0 g/10 min or less, 20.0 g/10 min or less, 15.0 g/10 min or less, or 10.0 g/10 min or less, but it is not limited thereto.

In an embodiment, the polyolefin resin composition of the present invention may comprise the propylene-alpha-olefin rubber copolymer in an amount of 1 to 39 % by weight, based on 100 % by weight of the total of the components (A), (B) and (C). If the amount of the propylene-alpha-olefin rubber copolymer in the polyolefin resin composition is excessively lower than the above level, there may be a problem of insufficient use effect (e.g., problem of poor softness, etc.), and to the contrary, if it is excessively higher than the above level, the heat resistance of the molded article may decrease rapidly. More specifically, the amount of the propylene-alpha-olefin rubber copolymer in the total 100 % by weight of the components (A), (B) and (C) may be 1 % by weight or more, 3 % by weight or more, 5 % by weight or more, 7 % by weight or more, 10 % by weight or more, or 13 % by weight or more, and it also may be 39 % by weight or less, 35 % by weight or less, 30 % by weight or less, 28 % by weight or less, 25 % by weight or less. or 20 % by weight or less, but it is not limited thereto.

In an embodiment, the propylene-alpha-olefin rubber copolymer can be polymerized by additionally supplying propylene and alpha-olefin monomer in the presence of ethylene-propylene block copolymer in a fourth stage gas phase reactor subsequent to the above-mentioned Hypol production process.

In other embodiment, the polyolefin resin composition of the present invention can also be prepared by blending a commercially available propylene-alpha-olefin rubber copolymer with an ethylene-propylene block copolymer obtained in the Hypol production process. Commercially available propylene-alpha-olefin rubber copolymers include, but are not particularly limited to, Versify (DOW), Vistamaxx (ExxonMobil), and Tafmer (Mitsui).

### (C) Polyethylene glycol with a number average molecular weight of less than 20,000 g/mol

The polyolefin resin composition of the present invention also comprises a polyethylene glycol with a number average molecular weight of less than 20,000 g/mol. This component can be used for improving the interfacial stability of the resin composition.

If the number average molecular weight of polyethylene glycol is more than or equal to 20,000 g/mol, the effect of increasing the interfacial stability between the ethylene-propylene block copolymer (component A) and the propylene-alpha-olefin rubber copolymer (component B) is lowered. There is no particular limitation to the lower limit of the number average molecular weight of polyethylene glycol, and for example, it may be 500 g/mol or more, but it is not limited thereto. If the number average molecular weight of polyethylene glycol is excessively lower than the above level, such a polyethylene glycol may be in a liquid state at room temperature and behave differently from polyolefin, resulting in poor dispersibility. The number average molecular weight of polyethylene glycol can be measured using a known measuring means, for example, gel permeation chromatography (GPC).

More specifically, the number average molecular weight of the polyethylene glycol may be less than 20,000 g/mol, 19,000 g/mol or less, 17,000 g/mol or less, 15,000 g/mol or less, 13,000 g/mol or less, 11,000 g/mol or less, 10,000 g/mol or less, or 9,000 g/mol or less, and it also may be 500 g/mol or more, 1,000 g/mol or more, 2,000 g/mol or more, 3,000 g/mol or more, 4,000 g/mol or more, 5,000 g/mol or more, 6,000 g/mol or more, or 7,000 g/mol or more, but it is not limited thereto.

In an embodiment, the polyolefin resin composition of the present invention may comprise the polyethylene glycol in an amount of 0.01 to 2 % by weight, based on 100 % by weight of the total of the components (A), (B) and (C). If the amount of the polyethylene glycol in the polyolefin resin composition is excessively lower than the above level, there may be a problem of insufficient use effect, and to the contrary, if it is excessively higher than the above level, the dielectric constant of the resin composition is increased and ultimately there may be a problem of lowering the insulation performance of cable. More specifically, the amount of the polyethylene glycol in the total 100 % by weight of the components (A), (B) and (C) may be 0.01 % by weight or more, 0.05 % by weight or more, 0.1 % by weight or more, 0.15 % by weight or more, 0.2 % by weight or more, 0.25 % by weight or more, or 0.3 % by weight or more, and it also may be 2 % by weight or less, 1.8 % by weight or less, 1.5 % by weight or less, 1.3 % by weight or less, 1 % by weight or less, 0.8 % by weight or less, or 0.5 % by weight or less, but it is not limited thereto.

In addition to the components explained above, the polyolefin resin composition of the present invention may further comprise one or more additives generally used in polypropylene-based resin compositions.

In an embodiment, the polyolefin resin composition of the present invention may further comprise at least one additive selected from the group consisting of antioxidant, neutralizer, UV stabilizer, long-term heat stabilizer, slip agent, anti-blocking agent, reinforcing agent, filler, weather stabilizer, antistatic agent, lubricant, nucleating agent, flame retardant, pigment and dye, but it is not limited thereto.

In an embodiment, the antioxidant may be phenol-based antioxidant, phosphite-based antioxidant, etc., and more specifically, one or more selected from the group consisting of tetrakis(methylene(3,5-di-t-butyl-4-hydroxy)hydrosilylate), 1,3,5-trimethyl-tris(3,5-di-t-butyl-4-hydroxybenzyl)benzene, and tris(2,4-di-t-butylphenyl)phosphite, but it is not limited thereto.

In an embodiment, the neutralizer may be one or more selected from the group consisting of hydrotalcite and inorganic salt (e.g., calcium salt) stearate, but it is not limited thereto.

The amounts of such additives are not particularly limited, and depending on the purpose and use, each additive may be used in an amount of, for example, 0.01 to 2 parts by weight, more specifically, within the range of 0.05 to 1 part by weight, based on 100 parts by weight of the total composition of the present invention, but it is not limited thereto.

In an embodiment, the amount of rubber component in 100 % by weight of the polyolefin resin composition of the present invention may be 25 to 45 % by weight, as extracted with a xylene solvent at 135°C, and this may be the amount of solvent extract extracted from the polyolefin resin composition using a xylene solvent at 135°C.

If the amount of rubber component in the polyolefin resin composition is excessively lower than the above level, the strength of the molded article may increase and thus the flexibility may decrease, and to the contrary, if it is excessively higher than the above level, a phase transition may occur between the polypropylene-based matrix and the rubber component and thus gaps may be formed between the interfaces, causing electric field distortion. More specifically, the amount of rubber component in 100 % by weight of the polyolefin resin composition may be 25 % by weight or more, 30 % by weight or more, 35 % by weight or more, or 40 % by weight or more, and it also may be 45 % by weight or less, 44 % by weight or less, or 43 % by weight or less, but it is not limited thereto.

In an embodiment, the glass transition temperature of rubber component in the polyolefin resin composition (i.e., the solvent extract extracted from the polyolefin resin composition using a xylene solvent at 135°C) may be -60 to -35°C. The glass transition temperature of the rubber component in the polyolefin resin composition can be measured by a known measuring means, for example, a dynamic mechanical analyzer (DMA), and as measured with DMA, the glass transition temperature can be shown between -60 and -35°C. If the glass transition temperature of the rubber component is shown only above -35°C, the low-temperature (-20°C) impact resistance of the resin composition may deteriorate.

In an embodiment, the melting temperature (Tm) of the polyolefin resin composition of the present invention may be 145 to 165°C. If the melting temperature of the polyolefin resin composition is excessively lower than the above level, the heat resistance of the molded article becomes insufficient and resin degeneration by heat may occur, and thus it is not suitable for application to high-voltage power cables in which the operating temperature and instantaneous temperature rise to 130°C or higher. More specifically, the melting temperature of the polyolefin resin composition may be 145°C or higher, 146°C or higher, 147°C or higher, 148°C or higher, 149°C or higher, or 150°C or higher, and it also may be 165°C or lower, 163°C or lower, 160°C or lower, 158°C or lower, 155°C or lower, or 153°C or lower, but it is not limited thereto.

In an embodiment, the melt index of the polyolefin resin composition of the present invention may be 0.5 to 20.0 g/10 min, as measured at 230°C under a load of 2.16 kg according to ASTM D1238. If the melt index of the polyolefin resin composition is excessively lower than the above level, the extrusion temperature and load may increase, lowering productivity and causing carbonization, and to the contrary, if it is excessively higher than the above level, sagging may occur during the formation of extruded article. More specifically, the melt index of the polyolefin resin composition may be 0.5 g/10 min or more, 0.7 g/10 min or more, 1.0 g/10 min or more, 1.3 g/10 min or more, or 1.5 g/10 min or more, and it also may be 20.0 g/10 min or less, 15.0 g/10 min or less, 10.0 g/10 min or less, 5.0 g/10 min or less, or 3.0 g/10 min or less, but it is not limited thereto.

In an embodiment, the flexural modulus of the polyolefin resin composition of the present invention may be less than 450 MPa, as measured by applying a flexural load at a rate of 5 mm/min according to ASTM D790. When the flexural modulus of a molded article processed according to ASTM D790 using the polyolefin resin composition of the present invention is within the above range, the softness of the molded article is excellent, and when it is applied to the insulation layer of ultra-high voltage power cable, the flexibility is excellent even if the insulation layer is thick, making it easy to install high voltage or ultra-high voltage power cable. More specifically, the flexural modulus of the polyolefin resin composition may be less than 450 MPa, 440 MPa or less, 430 MPa or less, 420 MPa or less, 410 MPa or less, 400 MPa or less, 390 MPa or less, 380 MPa or less, or 370 MPa or less, but it is not limited thereto. There is no particular limitation to the lower limit of the flexural modulus of the polyolefin resin composition, and it may be, for example, 250 MPa or more, 300 MPa or more, or 320 MPa or more, but it is not limited thereto.

In an embodiment, a sheet with 1 mm thickness prepared by molding the polyolefin resin composition at a cooling rate of 1°C/min or less may not exhibit interfacial separation. More specifically, the cooling rate may be 0.8°C/min or less, or 0.5°C/min or less, but it is not limited thereto.

In an embodiment, a sheet with 20 mm thickness prepared by molding the polyolefin resin composition at a cooling rate of 1°C/min or less, when aged at 80°C for 30 days (accelerated aging test), may not exhibit interfacial separation. More specifically, the cooling rate may be 0.8°C/min or less, or 0.5°C/min or less, but it is not limited thereto.

In an embodiment, the occurrence of the interfacial separation can be determined by visual inspection, polarizing microscopy, scanning electron microscopy (SEM), or a combination of one or more of these techniques. For example, it is determined that no interfacial separation occurs if the above-mentioned molded article (sheet) of the polyolefin resin composition has no spots when observed with the naked eye, and if no pores of 5 µm or more (for a sheet with a thickness of 1 mm) or 10 µm or more (for a sheet with a thickness of 20 mm) are formed inside when observed on a microscale (preferably a scale of 500 nm to 50 µm) using a scanning electron microscope.

The other aspect of the present invention provides a method for preparing a polyolefin resin composition, comprising (1) a step of copolymerizing propylene and alpha-olefin in the presence of ethylene-propylene block copolymer to produce a propylene-alpha-olefin rubber copolymer with a propylene content of more than 60 % by weight, or blending an ethylene-propylene block copolymer with a propylene-alpha-olefin rubber copolymer with a propylene content of more than 60 % by weight; and (2) a step of adding polyethylene glycol with a number average molecular weight of less than 20,000 g/mol to the resulting product of step (1).

In the method for preparing a polyolefin resin composition of the present invention, the ethylene-propylene block copolymer, the propylene-alpha-olefin rubber copolymer with a propylene content of more than 60 % by weight, and the polyethylene glycol with a number average molecular weight of less than 20,000 g/mol are the same as explained above.

In an embodiment, the 'copolymerizing propylene and alpha-olefin in the presence of ethylene-propylene block copolymer to produce a propylene-alpha-olefin rubber copolymer with a propylene content of more than 60 % by weight' can be conducted by a known method in the technical field of the present invention as is or with appropriate modifications. For example, after preparing an ethylene-propylene block copolymer using the above-described Hypol process wherein two bulk reactors and one gas phase reactor are connected in series, copolymerization can be performed continuously by additionally supplying propylene and alpha-olefin monomers in the presence of the ethylene-propylene block copolymer in a subsequent fourth stage gas phase reactor while controlling the amount of propylene input.

Also in an embodiment, the 'blending an ethylene-propylene block copolymer with a propylene-alpha-olefin rubber copolymer with a propylene content of more than 60 % by weight' can be conducted by a known method in the technical field of the present invention as is or with appropriate modifications. Specifically, for example, a method may be used in which a predetermined amount of ethylene-propylene block copolymer and propylene-alpha-olefin rubber copolymer with a propylene content of more than 60 % by weight are fed together with other additives into a blender such as a kneader, roll, Banbury mixer, or other mixer, or a single-screw/twin-screw extruder, and then the fed raw materials are blended using the device.

In an embodiment, the 'adding polyethylene glycol with a number average molecular weight of less than 20,000 g/mol to the resulting product of step (1)' also can be conducted by a known method in the technical field of the present invention as is or with appropriate modifications. Specifically, for example, after adding polyethylene glycol with a number average molecular weight of less than 20,000 g/mol to the resulting product of step (1), mixing can be performed using a blender such as a kneader, roll, Banbury mixer, or other mixer, or a single-screw/twin-screw extruder.

The polyolefin resin composition according to the present invention has excellent flexibility, low-temperature impact resistance, heat resistance, etc., good insulation breakdown characteristics, and, in particular, excellent interface stability for long-term life improvement, so that it can be suitably utilized as an eco-friendly material for insulation layer in power cables for low-voltage, high-voltage, or extra-high-voltage direct current (DC) or alternating current (AC) transmission or distribution (especially, insulation layer of high-voltage or extra-high-voltage power cables).

Therefore, another aspect of the present invention provides an article comprising the polyolefin resin composition of the present invention.

In an embodiment, the polyolefin resin composition of the present invention comprised in the article may be that molded at a cooling rate of 1°C/min or less. More specifically, the cooling rate may be 0.8°C/min or less, or 0.5°C/min or less, but it is not limited thereto.

In an embodiment, the article may be a power cable comprising the polyolefin resin composition of the present invention as insulation layer. More specifically, the power cable may be a power cable for high-voltage or extra-high-voltage, but it is not limited thereto.

There is no particular limitation to the method for manufacturing an article from the polyolefin resin composition of the present invention, and a known method in the technical field of the present invention (e.g., injection molding, extrusion, etc.) can be used.

The present invention is explained in more detail through the following Examples and Comparative Examples. However, the scope of the present invention is not limited thereby in any manner.

### [EXAMPLES]

### Example 1

### (1) Preparation of ethylene-propylene block copolymer

The preparation of polyolefin resin composition including polymerization of ethylene-propylene block copolymer was performed using Hypol process of Mitsui allowing continuous polymerization by connecting two bulk slurry reactors and two gas phase reactors in series. The operating temperature and pressure of the first and second stage reactors, which were bulk reactors, were 68 to 75°C and 25 to 35 kg/cm², and 60 to 67°C and 20 to 30 kg/cm², respectively. The operating temperature and pressure of the third stage reactor, which was a gas phase reactor, were 75 to 82°C and 15 to 20 kg/cm². Ethylene-propylene random copolymer was polymerized in the first and second stage bulk reactors (at this time, the ratio of ethylene and propylene was adjusted so that the same amount of ethylene was copolymerized in each reactor), and then in the third stage reactor, ethylene and propylene were introduced for block copolymerization of ethylene-propylene rubber component, thereby obtaining ethylene-propylene block copolymer.

### (2) Preparation of polyolefin resin composition

The ethylene-propylene block copolymer prepared above was blended with commercially available propylene-alpha-olefin rubber copolymer [Versify (Dow), Vistamaxx (DOW), Tafmer (Mitsui)]. Blending was performed according to the monomer composition of component (B) shown in Table 1 below. Then, polyethylene glycol #8000 (number average molecular weight: 8,000 g/mol, BASF) was added to the obtained product and mixed to prepare polyolefin resin composition.

### Example 2

### (1) Preparation of ethylene-propylene block copolymer

Ethylene-propylene block copolymer was prepared in the same manner as in step (1) of Example 1.

### (2) Preparation of polyolefin resin composition

After preparation of the ethylene-propylene block copolymer, in a fourth stage gas phase reactor following the above-described Hypol process, propylene and alpha-olefin monomer (ethylene) were additionally supplied in the presence of the ethylene-propylene block copolymer, and thereby propylene-alpha-olefin rubber copolymer was continuously copolymerized and prepared. The operating temperature and pressure of the fourth stage reactor were 68 to 75°C and 10 to 17 kg/cm². Then, polyethylene glycol #8000 (number average molecular weight: 8,000 g/mol, BASF) was added to the obtained product and mixed to prepare polyolefin resin composition.

### Comparative Example 1

Ethylene-propylene block copolymer was prepared in the same manner as in step (1) of Example 1, and it was used as is in the property tests described below.

### Comparative Example 2

### (1) Preparation of ethylene-propylene block copolymer

Ethylene-propylene block copolymer was prepared in the same manner as in step (1) of Example 1.

### (2) Preparation of polyolefin resin composition

After preparation of the ethylene-propylene block copolymer, polyolefin resin composition was prepared in the same manner as in step (2) of Example 1. Blending was performed according to the monomer composition of component (B) shown in Table 1 below.

### Comparative Example 3

### (1) Preparation of ethylene-propylene block copolymer

Ethylene-propylene block copolymer was prepared in the same manner as in step (1) of Example 1.

### (2) Preparation of polyolefin resin composition

After preparation of the ethylene-propylene block copolymer, polyolefin resin composition was prepared in the same manner as in step (2) of Example 1. Blending was performed according to the monomer composition of component (B) shown in Table 1 below.

### Comparative Example 4

### (1) Preparation of ethylene-propylene block copolymer

Ethylene-propylene block copolymer was prepared in the same manner as in step (1) of Example 2.

### (2) Preparation of polyolefin resin composition

After preparation of the ethylene-propylene block copolymer, polyolefin resin composition was prepared in the same manner as in step (2) of Example 1. Blending was performed according to the monomer composition of component (B) shown in Table 1 below.

### Comparative Example 5

### (1) Preparation of ethylene-propylene block copolymer

Ethylene-propylene block copolymer was prepared in the same manner as in step (1) of Example 1.

### (2) Preparation of polyolefin resin composition

After preparation of the ethylene-propylene block copolymer, polyolefin resin composition was prepared in the same manner as in step (2) of Example 1. But, in the case of polyethylene glycol, #20000 (number average molecular weight: 20,000 g/mol, Samchun Pure Chemicals) was used.

### Property tests

The properties of the resins or compositions prepared in Examples 1 to 2 and Comparative Examples 1 to 5 and the molded specimens thereof were measured according to the following methods and standards, and the results are shown in Table 1 below.

### (1) Melt index (g/10 min)

The melt index was measured at 230°C with a load of 2.16 kg according to the ASTM D 1238 method.

### (2) Rubber component content (weight %): Analysis of xylene solvent extract (xylene soluble, XS)

The resin or composition was dissolved in xylene at a concentration of 1% at 135°C for 1 hour, and after 2 hours, the solution was cooled to room temperature and extracted, and then the weight was measured and expressed as a percentage of the total weight of the resin or composition.

### (3) Intrinsic viscosity (dl/g) of rubber component (xylene solvent extract, XS)

The intrinsic viscosity of the xylene solvent extract obtained in (2) above was measured in decalin solvent at 135°C using a viscometer.

### (4) Melting Temperature (°C)

By using a TA Instrument Q2000 differential scanning calorimeter (DSC), the sample was held isothermally at 200°C for 10 minutes to remove thermal history, and then cooled by 10°C per minute from 200°C to 30°C to crystallize and maintain the same thermal history. The sample was then held isothermally at 30°C for 10 minutes, and then heated again by 10°C per minute, and the melting temperature (Tm) was determined from the peak temperature.

### (5) Glass Transition Temperature (°C)

By using a dynamic mechanical analyzer (DMA; TA Instrument Q800), the temperature was increased from -140°C to 145°C at a rate of 2°C/min, and a stress relaxation curve was obtained, from which the glass transition temperature (Tg) was determined.

### (6) Flexural modulus (FM) (MPa)

The flexural modulus was measured according to ASTM D 790 for injection-molded specimens of 100 mm × 10 mm × 3 mm.

### (7) Observation of interface separation using the naked eye/SEM

By using a hot press equipment and a mold capable of controlling the cooling rate, a plate-shaped sheet of 80 mm × 80 mm or more with thickness of 1 mm or 20 mm was manufactured.

The manufactured 1 mm-thick sheet was cooled at 0.3°C/min, and the structure and interfacial separation of the specimen were observed with the naked eye and using scanning electron microscopy (SEM). If there were no spots upon observation with the naked eye and no pores larger than 5 µm were formed inside upon observation with SEM, it was determined that no interfacial separation occurred.

In addition, the manufactured 20 mm-thick sheet was cooled at 0.3°C/min, placed in an oven, and aged at 80°C for 30 days. Thereafter, the structure and interfacial separation of the specimen were observed with the naked eye/SEM. If there were no spots upon observation with the naked eye and no pores larger than 10 µm were formed inside w upon observation with SEM, it was determined that no interfacial separation occurred.

**[Table 1]**

| | **Example** | | **Comparative Example** | | | | |
|---|---|---|---|---|---|---|---|
| | **1** | **2** | **1** | **2** | **3** | **4** | **5** |
| **(A) Ethylene-propylene block copolymer** | | | | | | | |
| Amount of (A) (wt%)¹⁾ | 85.0 | 80.0 | 100.0 | 80.0 | 75.0 | 80.0 | 85.0 |
| Propylene content (wt%)²⁾ | 85 | 83 | 85 | 85 | 85 | 83 | 85 |
| Ethylene content (wt%)²⁾ | 15 | 17 | 15 | 15 | 15 | 17 | 15 |
| XS content (wt%)²⁾ | 30 | 40 | 30 | 30 | 30 | 40 | 30 |
| XS intrinsic viscosity (dl/g) | 1.5 | 2.5 | 1.5 | 1.5 | 1.5 | 2.5 | 1.5 |
| Melt index (g/10min) | 1.7 | 2.6 | 1.7 | 1.7 | 1.7 | 2.6 | 1.7 |
| Melting temperature (Tm, °C) | 152 | 151 | 152 | 152 | 152 | 151 | 152 |
| Glass transition temperature (°C) | -46/-37 | -44/-35 | -46/-37 | -46/-37 | -46/-37 | -44/-35 | -46/-37 |

| **(B) Propylene-alpha-olefin rubber copolymer** | | | | | | | |
|---|---|---|---|---|---|---|---|
| Amount of (B) (wt%)¹⁾ | 14.7 | 19.5 | - | 19.5 | 25.0 | 20.0 | 14.5 |
| Propylene content (wt%)²⁾ | 80 | 88 | - | 60 | 80 | 75 | 80 |
| Ethylene content (wt%)²⁾ | 5 | 12 | - | 40 | 5 | - | 5 |
| Butene content (wt%)²⁾ | 15 | - | - | - | 15 | 25 | 15 |

| **(C) Polyethylene glycol** | | | | | | | |
|---|---|---|---|---|---|---|---|
| #20000 (wt%)¹⁾ | - | - | - | - | - | - | 0.5 |
| #8000 (wt%)¹⁾ | 0.3 | 0.5 | - | 0.5 | - | - | - |

| **Property of resin composition** | | | | | | | |
|---|---|---|---|---|---|---|---|
| Melt index (g/10min) | 2.0 | 2.7 | - | 2.1 | 2.3 | 2.6 | 2.0 |
| XS content (wt%) | 40 | 43 | - | 42 | 45 | 43 | 40 |
| XS intrinsic viscosity (dl/g) | 1.8 | 2.8 | - | 2.3 | 2.0 | 2.3 | 1.8 |
| Melting temperature (Tm, °C) | 152 | 151 | - | 151 | 150 | 151 | 152 |
| Glass transition temperature (°C) | -40 | -38 | - | -41/-25 | -40 | -35 | -38 |
| Flexural modulus (MPa) | 320 | 370 | 480 | 310 | 300 | 420 | 320 |

| **interfacial separation occurrence** | | | | | | | |
|---|---|---|---|---|---|---|---|
| 1 mm sheet | No | No | Yes | Yes | No | No | No |
| 20 mm sheet (80°C, after 30 days) | No | No | (Not tested) | (Not tested) | Yes | Yes | Yes |

| | | | | | | | |
|---|---|---|---|---|---|---|---|
| 1) Based on 100 % by weight of the total of the components (A), (B) and (C) 2) Based on 100 % by weight of the copolymer | | | | | | | |

As confirmed from Table 1 above, molded articles manufactured from the resin compositions of Examples according to the present invention exhibited excellent softness due to low flexural modulus, a low glass transition temperature advantageous for impact resistance, and excellent interfacial stability.

On the other hand, the composition of Comparative Example 1 exhibited insufficient softness in the molded article and exhibited interfacial separation occurrence under slow cooling conditions, the composition of Comparative Example 2 exhibited interfacial separation occurrence under slow cooling conditions, and the compositions of Comparative Examples 3 to 5 exhibited interfacial separation occurrence in the aging test after the slow cooling process.

## Claims

1. A polyolefin resin composition comprising:
(A) an ethylene-propylene block copolymer;
(B) a propylene-alpha-olefin rubber copolymer with a propylene content of more than 60 % by weight; and
(C) a polyethylene glycol with a number average molecular weight of less than 20,000 g/mol.

2. The polyolefin resin composition of claim 1, wherein the ethylene-propylene block copolymer is a polymerization product of a propylene homopolymer or an ethylene-propylene random copolymer and an ethylene-propylene rubber copolymer.

3. The polyolefin resin composition of claim 1, wherein the amount of rubber component in 100 % by weight of the ethylene-propylene block copolymer is 1 to 45 % by weight, as extracted with a xylene solvent at 135°C.

4. The polyolefin resin composition of claim 1, wherein the intrinsic viscosity of rubber component in the ethylene-propylene block copolymer is 1.0 to 4.0 dl/g, as measured in a decalin solvent at 135°C.

5. The polyolefin resin composition of claim 1, wherein the melting temperature (Tm) of the ethylene-propylene block copolymer is 145 to 165°C.

6. The polyolefin resin composition of claim 1, wherein the melt index of the ethylene-propylene block copolymer is 0.5 to 20.0 g/10 min, as measured at 230°C under a load of 2.16 kg according to ASTM D1238.

7. The polyolefin resin composition of claim 1, wherein the propylene-alpha-olefin rubber copolymer is at least one selected from the group consisting of propylene-ethylene rubber, propylene-1-butene rubber, propylene-butylene rubber, propylene-ethylene-butylene rubber, propylene-1-pentene rubber, propylene-1-hexene rubber, propylene-1-heptene rubber, propylene-1-octene rubber and propylene-4-methyl-1-pentene rubber.

8. The polyolefin resin composition of claim 1, further comprising at least one additive selected from the group consisting of antioxidant, neutralizer, UV stabilizer, long-term heat stabilizer, slip agent, anti-blocking agent, reinforcing agent, filler, weather stabilizer, antistatic agent, lubricant, nucleating agent, flame retardant, pigment and dye.

9. The polyolefin resin composition of claim 1, wherein the amount of rubber component in 100 % by weight of the polyolefin resin composition is 25 to 45 % by weight, as extracted with a xylene solvent at 135°C.

10. The polyolefin resin composition of claim 1, wherein the glass transition temperature of rubber component in the polyolefin resin composition is -60 to -35°C.

11. The polyolefin resin composition of claim 1, wherein the melting temperature (Tm) of the polyolefin resin composition is 145 to 165°C.

12. The polyolefin resin composition of claim 1, wherein the melt index of the polyolefin resin composition is 0.5 to 20.0 g/10 min, as measured at 230°C under a load of 2.16 kg according to ASTM D1238.

13. The polyolefin resin composition of claim 1, wherein the flexural modulus of the polyolefin resin composition is less than 450 MPa, as measured by applying a flexural load at a rate of 5 mm/min according to ASTM D790.

14. The polyolefin resin composition of claim 1, wherein a sheet with 1 mm thickness prepared by molding the polyolefin resin composition at a cooling rate of 1°C/min or less does not exhibit interfacial separation.

15. The polyolefin resin composition of claim 1, wherein a sheet with 20 mm thickness prepared by molding the polyolefin resin composition at a cooling rate of 1 °C/min or less, when aged at 80°C for 30 days, does not exhibit interfacial separation.

16. A method for preparing a polyolefin resin composition, comprising:
(1) a step of copolymerizing propylene and alpha-olefin in the presence of ethylene-propylene block copolymer to produce a propylene-alpha-olefin rubber copolymer with a propylene content of more than 60 % by weight, or blending an ethylene-propylene block copolymer with a propylene-alpha-olefin rubber copolymer with a propylene content of more than 60 % by weight; and
(2) a step of adding polyethylene glycol with a number average molecular weight of less than 20,000 g/mol to the resulting product of step (1).

17. An article comprising the polyolefin resin composition of any one of claims 1 to 15.

18. The article of claim 17, wherein the polyolefin resin composition is that molded at a cooling rate of 1°C/min or less.

19. The article of claim 17, which is a power cable comprising the polyolefin resin composition as insulation layer.
